Europäisches Patentamt

European Patent Office

Office européen des brevets

(11) Publication number: **0 104 766**

**B1**

(12) **EUROPEAN PATENT SPECIFICATION**

(45) Date of publication of patent specification: 27.07.88

(21) Application number: 83304902.6

(22) Date of filing: 24.08.83

(51) Int. Cl.⁴: **A 01 K 39/012**

(54) **A dispenser for bird food.**

(30) Priority: 24.08.82 GB 8224299
18.02.83 GB 8304564

(43) Date of publication of application:
04.04.84 Bulletin 84/14

(45) Publication of the grant of the patent:
27.07.88 Bulletin 88/30

(84) Designated Contracting States:
DE FR NL SE

(56) References cited:
US-A-3 441 002
US-A-4 233 941

(73) Proprietor: ADIL, Mehmet Nazim
Baysal Gulboy P.O. Box 80
Girne Mersin 10 (TR)

(72) Inventor: Hegedus, Leslie John
145 White Hart Lane
London SW13 0JP (GB)
Inventor: Bentall, Simon William
9 New England Street
St. Albans Hertfordshire (GB)

(74) Representative: Powell, Stephen David et al
J.F. Williams & Co. 34 Tavistock Street
London WC2E 7PB (GB)

Courier Press, Leamington Spa, England.

## Description

The present invention relates to dispensers, in particular those for feeding birds.

Many existing bird-feeders comprise a container with apertures in the side walls and a perch below each aperture. Bird seed or other food is poured into the container from a packet and the bird-feeder is hung on a branch etc in the garden. A bird lands on a perch and pecks food from the adjacent aperture.

A disadvantage of such known bird-feeders is that the food must be transferred from the packet in which it is purchased to the bird-feeder itself. This is time-consuming and can involve the spillage of food. A further disadvantage is that, once in use, the birdfeeder cannot be easily transported without causing spillage of the food.

In U.S. 3441002 there is disclosed a bird feed package converted feeder comprising a cardboard container having perforations which define a flap. The flap may be moved inwardly to leave an opening for the access of birds, and is held in this position by tabs bent out of the side wall of the container. The flap serves to restrict the down flow of seed into the lower feeding portion.

In U.S. 4233941 there is disclosed a disposable feeder for birds comprising a cardboard container with a foldable perch which can cover a small feeding aperture. The feeder contains a plastic bag of seed which is perforated adjacent to the aperture so as to meter the supply of seed. To open out the perch it is necessary to pull a latch tab thereon out of a detent opening, the latch tab being detached if desired. The perch is then pulled down and the gussets formed by side tabs are extended. Further tabs are then engaged against the edges of respective openings.

According to the present invention, there is provided a dispenser comprising a container for holding bird food and having an aperture at a lower portion thereof for access to the bird food therein, an internal baffle means adjacent the aperture to restrict movement of the contents of the container, and a perch member pivotally mounted at or below the lower edge of the aperture, characterised in that the perch member is readily and repeatedly pivotable between a first position in which it closes the aperture and a second position in which the aperture is uncovered and in that in said first position the perch member lies flush with the surrounding part of the container.

An advantage of the above arrangement is that the bird food may be sold in and dispensed from a single container. Furthermore since the perch member is readily and repeatedly pivotable, the aperture may be closed immediately when desired, for example when particularly inclement weather occurs, or when there is a cat in the vicinity, or when it is desired to transport the dispenser without causing spillage of food.

An upwardly extending ledge is preferably provided at 3 the lower edge of the aperture. This has the advantage of further restricting movement of the contents of the container. In particular it prevents bird food from flowing out on to the perch. It thus serves to prevent the food from becoming wet or from being blown away by the wind. In addition it means that the perch member can be pivoted to its closed position at any time without being hindered by an accumulation of bird food thereon; the need to remove such food, which is time-consuming and wasteful, is avoided.

A downwardly projecting portion is preferably provided at the upper edge of the aperture. This serves to provide a snap engagement for the perch member in its closed position. In addition the projecting portion prevents leakage of water into the dispenser when the perch member is closed. Furthermore it also restricts such leakage to a certain extent even when the perch member is open.

The perch member preferably fits in a recess surrounding the aperture. This provides a flush arrangement and improved protection of the contents of the container from ingress of moisture etc.

The dispenser preferably has a plurality of perch members.

Preferred embodiments of the present invention will now be described, by way of example only, with reference to the accompanying drawings, of which:

Figure 1 is a side view of a dispenser in accordance with a first embodiment of the present invention;

Figure 2 is an end view of the dispenser of Figure 1;

Figure 3 is a top view of the dispenser of Figure 1;

Figure 4 is a sectional side view of the dispenser of Figure 1;

Figure 5 is a bottom view of the dispenser of Figure 1;

Figure 6 is a side view of a dispenser in accordance with a second embodiment of the present invention in a closed configuration;

Figure 7 is a side view of the dispenser of Figure 6 in an open configuration;

Figure 8 is a side sectional view of the dispenser of Figure 6 in its open configuration with one perch folded out;

Figure 9 is a top plan view of the dispenser of Figure 6; and

Figure 10 is a bottom plan view of the dispenser of Figure 6.

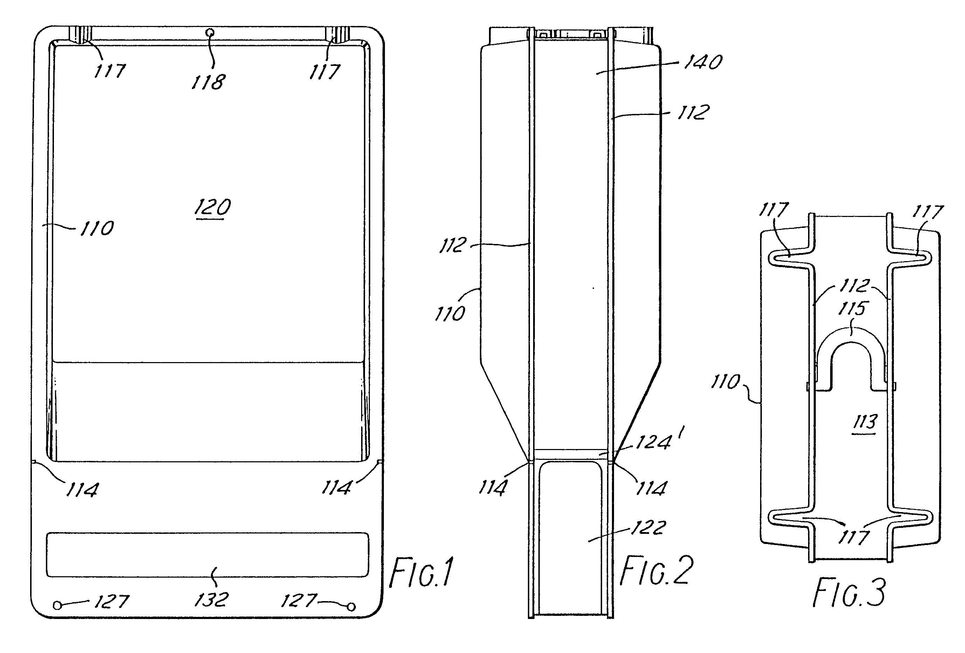

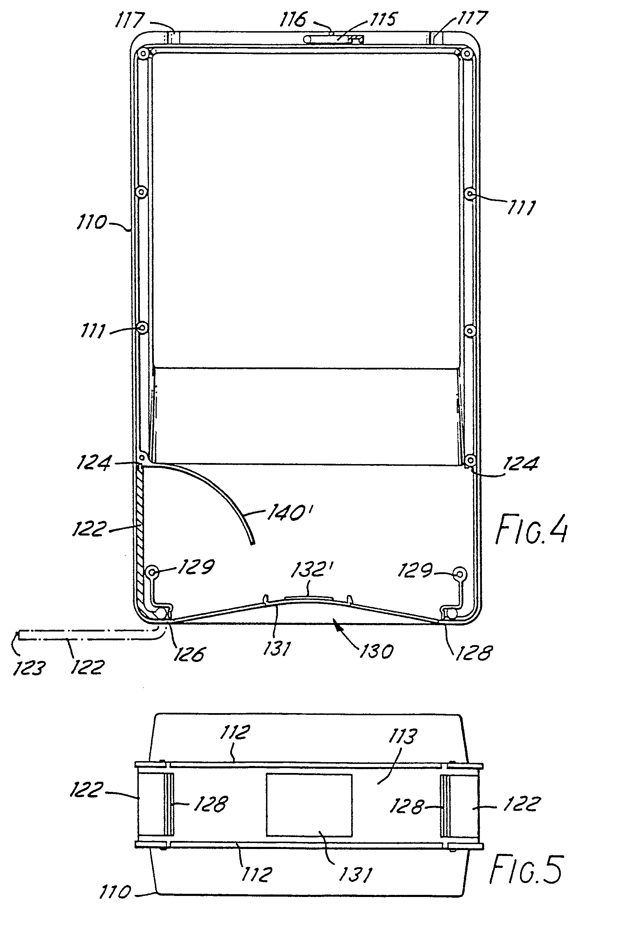

Referring now to the drawings, the dispenser in accordance with the first embodiment comprises a container 110 which is of moulded plastics material and which is generally rectangular with a tapering bottom portion. The container comprises two identical halves which are fitted together by means of male and female location bosses 111. Two ribs 112 extend around the top, ends and bottom of the container to define a track 113 therebetween. Small slots 114 are provided in the end-wall portions of the ribs. At the top of the container in use, a pivotable handle 115 is provided to suspend the container. The handle pivots engage in holes 118 of the container. When not required the handle 115 is held down in its flat position, as shown in Fig.4, by means of studs 116 on the body moulding. Also at the top of the container the ribs 112 are shaped to form wings 117, see Figure 3.

The upper side faces 120 of the container, constitute display panels for the attachment of labels bearing instructions for use, advertising and/or other matter.

At the bottom of the container each end is provided with a pivotable perch 122, which moves between a first position (shown in full line at the left of Figure 4) in which it closes a feeding aperture in the end of the container, and a second position (shown in broken line at the left of Figure 4) in which it extends perpendicularly to the container. The perch at the right-hand side of Figure 4 has been omitted. The free end of the perch 122 has a stud 123 which snaps into a corresponding recess 124 of the container to hold the perch in its closed position. Immediately above each perch 122 the end wall of the container is provided with a further recess 124'. This forms a shallow sloping slipway to enable the finger of the user to prise out the perch into its open position The perch has pivot pins which engage in holes 127 of the side of the container. Between the pivot pins, the edge of the perch has a slot 126 which engages in a snap-fit manner with pips or a rib on the main moulding to hold the perch in its open position.

The bottom wall of the container adjacent pivot holes 127 is provided with drainage holes at 128. The bottom of the feeding aperture behind the perch is defined by a ledge 129.

The bottom wall of the container has a filler hole 130 which is closed by a bung 131, retained therein by an internal wall 132' of the container.

Immediately above each feeding aperture there is provided a cowl 140' which defines internal baffle means restricting movement of the contents of the container, e.g. bird seed. The cowl extends from one side wall to the opposite side wall and prevents the seed from escaping from the feeding aperture when the perch 122 is pivoted open. The cowl at the right-hand side of Figure 4 has been omitted.

The bottom of each side wall of the container is provided with an elongated recess 132 which may carry moulded lettering giving details of the manufacturer.

After assembly of the two halves of the container 110 with the perches 122, the container is inverted and filled with bird food, e.g. bird seed, via the filler hole 130. Bung 131 is then inserted and a length of adhesive tape 140 is placed around the container along the entire length of track 113. Handle 115 is then fitted to the container. The tape provides an airtight seal for the container and weatherproofing.

The container is sold in this form. At this stage the recesses 132 serve as a handle during transport and storage, since the container is narrower at this part than at the part adjacent to handle 115.

The stability of the container is ensured by support wings 117 of the ribs 112. The wings prevent rocking of the container and the possibility of it falling over. When it is desired to use the dispenser, it is inverted and the adhesive tape 140 is removed, at least from over the perches 122. The slots 114 serve to indicate the locations at which the tape should be cut, e.g. with the user's finger nail. The perches 122 are then pivoted open. Cowls 140' and ledges 129 restrict the loss of bird food during this operation. As birds eat the food at the bottom it is replenished by gravity. When the container is empty it may be replenished by temporarily closing the perches and removing bung 131. Alternatively the container may be arranged to be disposable.

An advantage of this embodiment is that it permits the contents to be sold in and dispensed from the same container. In addition perches 122 may be opened or closed as and when desired.

In a modification the perches and the bung are moulded with the hinges as one moulding. Alternatively the bung may be omitted, with adhesive tape 140 serving to cover the filler hole 130. In this case it is important that the tape is not removed from the filler hole during use, and the slots formed between the bottom wall of the container and the pivoted ends of the perches constitute limit guides for the removal of the tape similar to slots 114.

In another modification the upper end of each perch member 122 is slightly shorter and engages behind the lower edge of a projecting portion (not shown) which extends vertically downwardly from the upper edge of the aperture. This portion, which is similar to portion 49 of the second embodiment described below, also serves to prevent water entering the dispenser.

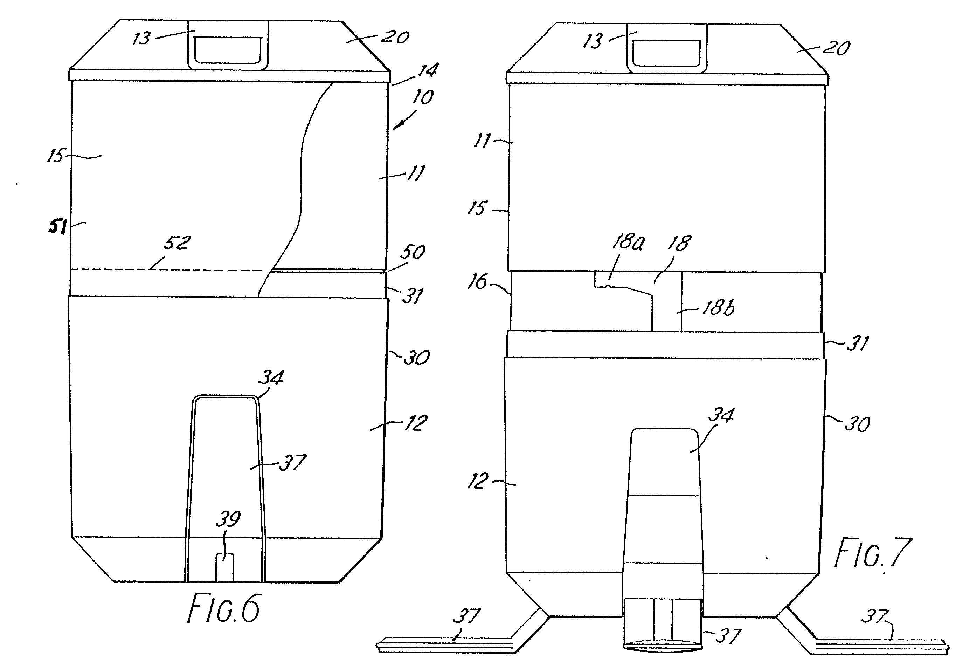

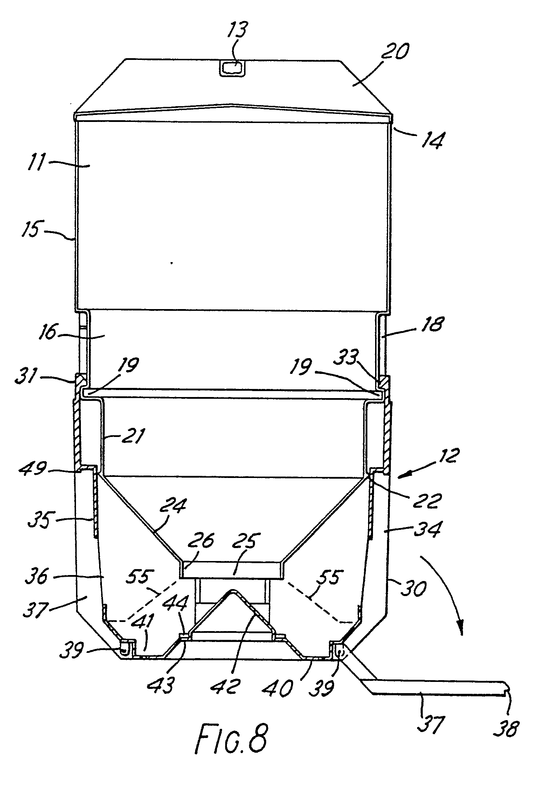

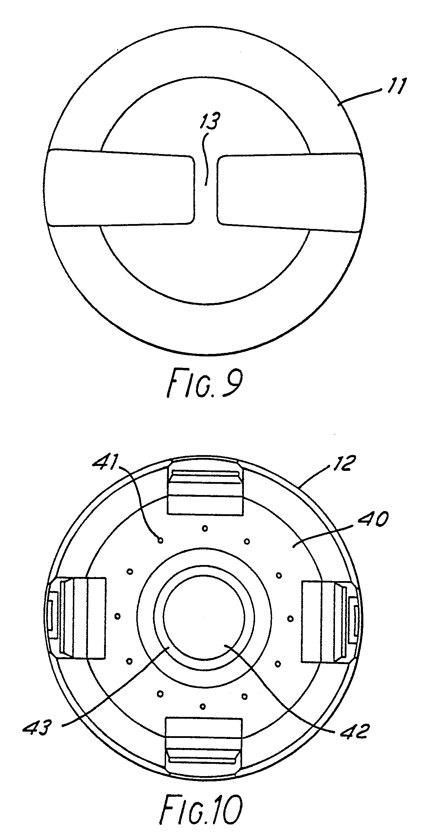

Referring now to Figures 6 to 10, the dispenser in accordance with the second embodiment comprises a generally cylindrical container 10 comprising an upper section 11 and an inter-fitting lower section 12, both of plastics material. At its top region 20, section 11 is provided with a handle 13 by means of which the dispenser may be carried or suspended. Below handle 13, the section 11 comprises a cylindrical region 15, the junction 14 between regions 20 and 15 being slightly undercut. Below region 15 is a slightly recessed cylindrical region 16, see Figs 7 and 8. At two diametrically-opposed positions, region 16 is provided with a generally Z-shaped recessed track or groove 18 Fig. 7, each comprising an upper circumferentially-extending part 18a, an intermediate axially-extending part 18b, and a lower circumferentially-extending part (not shown). Portions 19 define the lower walls of the lower circumferentially-extending parts. Below portions 19 there is a further cylindrical region 21. At the bottom of region 21 are located four circumferentially-spaced studs 22 which serve to provide a snug fit with lower section 12 and to eliminate rocking between sections 11 and 12.

Below region 21 a frusto-conical region 24 terminates in an aperture 25 having a cylindrical wall 26. The region 24 constitutes internal baffle means of this embodiment.

The lower section 12 of the dispenser comprises a cylindrical main wall region 30. Above this is a narrow slightly recessed cylindrical region 31. At two diametrically-opposed positions, the radially inner surface of region 31 is provided with catch means in the form of a retaining dog 33.

Below dogs 33, and also at the two circumferential positions midway between the two dogs (ie at 90° relative thereto) the region 30 has four recesses 34. At each of these positions the lower section has a radially inner wall 35 with a feeding aperture 36. A perch 37 is pivotable about a pivot 39 at the bottom of each recess 34. In its first closed position (see the left-hand side of Figure 8) it occupies recess 34 and closes feeding aperture 36. In its second open position (see the right-hand side of Figure 8), the perch permits access to the interior of the container.

Each perch terminates in a nose 38 which, in the closed configuration, is arranged to snap behind a projecting portion 49 at the top of each recess 34. Portions 49 also serve to prevent water entering the dispenser when the perches 37 are closed.

The bottom of the lower section 12 is closed by an annular region 40, having drain holes 41, and a generally-conical region 42, having a ledge 43 supporting a sealing ring 44.

When the dispenser is in its closed configuration a small gap 50, Figure 6, is formed between region 15 of upper section 11 and region 31 of lower section 12. When the dispenser is sold regions 15 and 31 are covered by a label 51 which is adhered to these regions. Label 51 carries a display, instructions for use, advertising and/or other matter. The exact positioning of label 51 is facilitated by the undercut at junction 14 and the ledge formed between the regions 30 and 31 of section 12. Label 51 carries a score line 52 lying over the gap 50. The score line can be supplemented or replaced by a line of perforations.

The dispenser is sold with the upper section 11 containing bird-seed or other food and is put into operation as follows. A knife or other sharp instrument is drawn along the score line 52 using the gap 50 as a guide. This permits the sections 11 and 12 to move relatively to each other. Section 12 is then twisted slightly relative to section 11 so that each dog 33 slides from the closed end of part 18a of its respective groove 18. When the dog reaches the righthand end of the groove, as seen in Figure 7, it can then slide down part 18b of the groove and limited relative axial movement apart of sections 11 and 12 can be effected. When the dog reaches the bottom of part 18b, a further slight relative twist between sections 11 and 12 in the same direction causes dog 33 to slide along the lower circumferential part (not shown) of groove 18. In this position of the dogs 33, further relative axial movement of sections 11 and 12 is prevented.

When the dispenser is in its closed configuration conical region 42, with the assistance of sealing ring 44, seals the aperture 25 in the bottom of upper section 11 thus preventing the escape of the contents of the upper section. When section 12 is moved in the direction away from section 11, the contents of container fall through the aperture and occupy a volume indicated generally by dashed lines 55, Figure 8 which are at approximately 35° to the horizontal. As birds eat the food, further food replaces it from section 11 under the effect of gravity.

The perches 37 are then folded out into their horizontal positions and the dispenser is immediately ready for suspension at a convenient location by means of handle 13.

If at any time it is desired to prevent access to the bird-food, or to protect the bird-food in inclement weather, perches 37 are simply folded back into their closed position.

The dispenser may be replenished as follows:

First of all dogs 33 are bent outwardly to remove them from grooves 18, and sections 11 and 12 are then completely separated. Upper section 11 is then inverted and filled with seed. Lower section 12 is then repositioned on section 11 with dogs 33 lying in groove parts 18a so that the dispenser is in its closed configuration. The dispenser is then re-inverted into its normal disposition and then re-opened as described above.

At any stage during use, the dispenser can be conveniently packed or stored simply by returning it to its compact closed configuration.

As with the first embodiment, an advantage of the above described arrangement is that it permits bird seed or other food to be sold in and dispensed from the same container. The relatively movable lower section 12 permits the dispenser to be converted in a simple manner from a compact arrangement for storage and transport purposes to a configuration in which bird seed or other food is automatically and continuously correctly dispensed.

Perches 37 have the alternative advantageous function when desired, of closing the container and preventing access to the food.

In a modification, top region 20 is constructed as a separate lid member for ease of replenishment. In a further alternative, the sections 11 and 12 cannot be completely separated; in this case the dispenser is arranged to be disposable after use.

If desired the lower part of Z-shaped groove 18 may be omitted, so that the groove has the form of an inverted letter 'L'.

Both of the dispensers may be sold containing bird-seed or other food suitable for birds. Alternatively they can be sold containing food for small animals; in such a case the perches 37, 122 would serve instead as approach ramps to the food. It is further envisaged that the dispensers could be filled with food for humans; for example they could constitute a salt-pig for dispensing sat while preventing the stored salt from becoming moist. Alternatively, the dispensers could be filled with other particulate substances such as soap powder.

Although the sections have been described as being of plastics material, they could be made wholly or partly of any other suitable material, such as a non-corrodable metal.

**Claims**

1. A dispenser comprising a container (110,10) for holding bird food and having an aperture at a lower portion thereof for access to the bird food therein, an internal baffle means (140',24) adjacent the aperture to restrict movement of the contents of the container, and a perch member (122,37) pivotally mounted at or below the lower edge of the aperture, characterised in that the perch member is readily and repeatedly pivotable between a first position in which it closes the aperture and a second position in which the aperture is uncovered and in that in said first position the perch member lies flush with the surrounding part of the container.

2. A dispenser according to claim 1 wherein an upwardly extending ledge (129) is provided at the lower edge of the aperture.

3. A dispenser according to claim 1 or 2 wherein a downwardly projecting portion (49) is provided at the upper edge of the aperture.

4. A dispenser according to any preceding claim wherein the perch member (122,37) fits in a recess (34) surrounding the aperture.

5. A dispenser according to any preceding claim wherein the container (10) comprises relatively movable upper and lower sections (11,12) which are movable apart to open an aperture (25) in the bottom of the upper section.

6. A dispenser according to claim 5 wherein one of the container sections (11) has a plurality of Z-shaped grooves (18) and the other container section (12) has a corresponding plurality of dog members (33) which engage in the grooves to guide the movement apart of the sections.

**Patentansprüche**

1. Eine Ausgabevorrichtung, enthaltend einen Behälter (110, 10) zur Aufnahme von Vogelfutter und mit einer Öffnung an deren unterem Teil zum Zugriff für das darin enthaltene Vogelfutter einer internen Ablenkplatten-Vorrichtung (140', 24) angrenzend an die Öffnung, um eine Bewegung der Behälterinhalte zu begrenzen, und ein Stangenteil (122, 37), das schwenkbar an oder unter der Unterkante der Öffnung befestigt ist, dadurch gekennzeichnet, daß das Stangenteil leicht und wiederholt zwischen einer ersten Stellung, in der es die Öffnung verschließt, und einer zweiten Stellung, in der die Öffnung nicht bedeckt ist, schwenkbar ist, und daß das Stangenteil in der ersten Stellung auf gleicher Höhe mit dem Umrandungsteil des Behälters liegt.

2. Eine Ausgabevorrichtung nach Anspruch 1, worin an der Unterkante der Öffnung eine aufwärts sich erstreckende Leiste (129) vorgesehen ist.

3. Eine Ausgabevorrichtung nach Anspruch 1 oder 2, worin an der Oberkante der Öffnung ein abwärts vorspringendes Teil (49) vorgesehen ist.

4. Eine Ausgabevorrichtung nach irgendeinem der vorigen Ansprüche, worin das Stangenteil (122, 37) um eine Vertiefung (34) paßt, die die Öffnung umgibt.

5. Eine Ausgabevorrichtung nach irgendeinem der vorigen Ansprüche, worin der Behälter (10) relativ bewegbare obere und untere Abschnitte (11, 12) enthält, die auseinander bewegbar sind, um eine Öffnung (25) im Boden des oberen Abschnitts zu öffnen.

6. Eine Ausgabevorrichtung nach Anspruch 5, worin einer der Behälterabschnitte (11) eine Vielzahl von Z-förmigen Einschnitten (18) und der andere Behälterabschnitt eine entsprechende Vielzahl von Nasenteilen (33) aufweist, die in die Einschnitte eingreifen, um die Auseinander-Bewegung der Abschnitte zu führen.

**Revendications**

1. Distributeur comprenant un réservoir (110,10) pour contenir de la nourriture pour oiseaux, comportant, à sa partie inférieure, une ouverture d'accès à la nourriture contenue à l'intérieur, un dispositif de cloisonnement interne (140',24) au voisinage de l'ouverture en vue de contenir le déplacement du contenu du réservoir et un élément en forme de perchoir (122,37) monté pivotant au droit ou en-dessous du bord inférieur de l'ouverture, caractérisé en ce que l'élément en forme de perchoir est monté pivotant de mainière aisée et à volonté entre une première position dans laquelle il ferme l'ouverture et une seconde position dans laquelle l'ouverture est découverte et en ce que dans ladite première position l'élément en forme de perchoir est de niveau avec la partie environnante du réservoir.

2. Distributeur selon la revendication 1, caractérisé en ce qu'un rebord (129) dirigé vers le haut est prévu au niveau du bord inférieur de l'ouverture.

3. Distributeur selon la revendication 1 ou 2, caractérisé en ce qu'une saillie (49) dirigée vers le bas est ménagée au niveau du bord supérieur de l'ouverture.

4. Distributeur selon l'une des revendications 1 à 3, caractérisé en ce que l'élément en forme de perchoir (122,37) vient se loger dans un renfoncement entourant l'ouverture.

5. Distributeur selon l'une des revendications 1 à 4, caractérise en ce que le réservoir (10) comprend des parties supérieure et inférieure (11, 12) mobiles l'une par rapport à 1 'autre de manière à découvrir une ouverture (25) dans le fond de la partie supérieure.

6. Distributeur selon la revendication 5, caractérisé en ce que l'une des parties (11) du réservoir comporte une série de gorges en forme de Z (18) et l'autre partie (12) présente une série de crochets (33) correspondants qui s'engagent dans les gorges pour assurer le guidage du mouvement relatif entre les parties.

FIG.1

FIG.2

FIG.3

FIG.4

FIG.5

FIG.7

FIG.6

0 104 766

FIG.8

FIG. 9

FIG.10